Europäisches Patentamt

European Patent Office

Office européen des brevets

(11) Numéro de publication: **0 296 024 B1**

# FASCICULE DE BREVET EUROPEEN

(45) Date de publication de fascicule du brevet: **14.10.92**  (51) Int. Cl.⁵: **G06K 1/02**, G06K 19/063

(21) Numéro de dépôt: **88401390.5**

(22) Date de dépôt: **08.06.88**

(54) **Procédé et dispositif de production d'étiquettes notamment métalliques à double codification dont un code à barres découpées, et étiquettes ainsi produites.**

(30) Priorité: **12.06.87 FR 8708494**

(43) Date de publication de la demande:
**21.12.88 Bulletin 88/51**

(45) Mention de la délivrance du brevet:
**14.10.92 Bulletin 92/42**

(84) Etats contractants désignés:
**CH DE GB IT LI SE**

(56) Documents cités:
**EP-A- 0 112 569**
**DE-A- 2 809 692**
**FR-A- 2 110 671**
**US-A- 2 836 245**
**US-A- 3 780 939**

**PATENT ABSTRACTS OF JAPAN, vol. 8, no. 252 (P-314)[1689], 17 novembre 1984, page 100 P 314; & JP-A-59 123 077**

**IBM TECHNICAL DISCLOSURE BULLETIN, vol. 20, no. 11B, avril 1978, page 4891, New York, US; D.S. GARRISS: "Bar-coded delimiters for ocr-coded information"**

(73) Titulaire: **LACROUTS-CAZENAVE S.A.R.L.**
**10, avenue du Président Kennedy**
**F-78340 Les Clayes-sous-Bois(FR)**

(72) Inventeur: **Lacrouts Cazenave, Joel Georges**
**3, allée des Fagotiers St Germain-de-la-Grange**
**F-78640 Neauphle-le-Chateau(FR)**

(74) Mandataire: **Boivin, Claude**
**9, rue Edouard-Charton**
**F-78000 Versailles(FR)**

## Description

La présente invention a pour objet un procédé et un dispositif de production d'étiquettes, et notamment des étiquettes métalliques du type à double codification et comportant une information codée par barres.

Les étiquettes métalliques découpées et/ou estampées résistent mieux à la chaleur ou aux agressions chimiques et mécaniques que, par exemple, des étiquettes sur support papier ou plastique, ou même que des étiquettes métalliques imprimées.

La réalisation, le montage et le conditionnement de produits sur une chaîne entièrement automatisée, les traitements successifs et les contrôles de ces différentes opérations nécessitent une identification sûre de ces produits pour les localiser en permanence et les trier. Cette identification unitaire doit résister aux températures élevées de certains traitements, aux trempages dans des bains de différentes natures, etc. Elle doit être facile à reconnaître par l'homme comme par divers procédés de lecture (laser, vision, etc.) et en n'importe quel point de la chaîne sans manipulation particulière.

Le document JP-59 123 077 divulgue un procédé de réalisation d'une étiquette comportant des découpes poinçonnées en forme de barres étroites et larges, formant un code à barres. Ce procédé utilise un poinçon unique ayant la largeur des barres étroites, qui découpe les barres larges en plusieurs opérations de poinçonnement successives, avec un certain recouvrement dans le sens de la largeur entre deux poinçonnements successifs. Ce procédé est assez lent dans la mesure où la réalisation d'une étiquette nécessite de nombreuses opérations de poinçonnement par le poinçon unique.

Il est certes connu de poinçonner simultanément plusieurs découpes dans une étiquette ou un ticket. Par exemple, le document US.3.780 939 décrit un dispositif de poinçonnement de tickets de parking, comportant des poinçons multiples actionnés sélectivement au moyen d'un coulisseau. Un tel dispositif peut réaliser des découpes multiples en une seule opération de poinçonnement, mais les poinçons sont ici écartés les uns des autres, de sorte que les découpes ne sont pas jointives. Il n'est donc pas possible d'utiliser un tel appareil pour poinçonner simultanément toutes les découpes en forme de barres étroites et larges d'une étiquette, au moyen de poinçons tous identiques ayant la forme des barres étroites et actionnés sélectivement par un coulisseau. En effet, cela impliquerait que les parties coupantes des poinçons soient jointives, ce qui paraît difficile en raison de l'encombrement des poinçons et de leurs moyens de guidage et d'actionnement sélectif.

Dans le dispositif du document US.3.780.939 précité, le coulisseau d'actionnement des poinçons comporte des puits de guidage parallèles à sa direction de coulissement, dans lesquels sont logés les poinçons. Des canaux recoupent perpendiculairement lesdits puits dans leur partie supérieure, et des cales actionnées par des éléctro-aimants coulissent dans ces canaux de façon à sélectivement pénétrer dans lesdits puits ou libérer lesdits puits. Lorsque le coulisseau est actionné, seuls les poinçons dont le puits est obturé par une cale réalisent une découpe, tandis que les autres peuvent coulisser librement dans leur puits. Un tel dispositif convient parfaitement pour découper des tickets en carton, mais le poinçonnement d'une étiquette métallique met en jeu des efforts plus importants qui risquent d'être retransmis aux cales et à leurs moyens d'actionnement, et d'endommager lesdits moyens d'actionnement : bien que les cales coulissent perpendiculairement aux poinçons, de tels efforts peuvent leur être retransmis notamment du fait du jeu entre le poinçon et son puits de guidage, ou du jeu entre les cales et leurs canaux.

La présente invention a pour but de proposer une solution à ces problèmes techniques.

La présente invention a donc pour objet un procédé d'usinage d'un ruban, notamment métallique, en vue d'obtenir des étiquettes portant une information codée par barres comportant au moins des barres minces et des barres larges découpées par un seul type de poinçon dans lesdites étiquettes, le procédé comportant les étapes suivantes, répétées cycliquement :

- usiner simultanément plusieurs étiquettes au moyen de poinçons indépendants actionnables sélectivement et adaptés à découper chacun un rectangle d'usinage ayant la forme d'une barre mince, lesdits poinçons étant répartis en plusieurs stations de découpage permettant chacune l'usinage partiel d'une desdites plusieurs étiquettes usinées simultanément, les rectangles d'usinage pouvant être découpés par deux poinçons voisins d'une même station de découpage étant séparés par une distance supérieure à une distance prédéterminée,

- faire avancer le ruban de la longueur d'une étiquette, de sorte qu'une même étiquette est successivement usinée par toutes les stations de découpage, les poinçons de chaque station de découpage étant disposés chacun de façon à pouvoir découper un rectangle d'usinage à une position sensiblement complémentaire des rectangles d'usinage pouvant être découpés par les poinçons des autres stations de découpage, en recouvrant légèrement latéralement les emplacements adjacents où des rectangles d'usinage peuvent être découpés par des poinçons des autres stations de découpage afin de pouvoir obtenir des barres larges.

Ainsi, une étiquette passe successivement dans plusieurs stations de découpage, mais à chaque mouvement des poinçons, une étiquette est terminée. Ce procédé est donc beaucoup plus rapide que les procédés connus.

La présente invention a aussi pour objet un dispositif d'usinage d'un ruban, notamment métallique, en vue d'obtenir des étiquettes portant une information codée par barres comportant au moins des barres minces et des barres larges découpées, ledit dispositif comprenant :

- un moyen d'alimentation en ruban ;
- un moyen de presse ;
- des poinçons identiques actionnables par l'intermédiaire de cales par ledit moyen de presse pour usiner le ruban ;
- une unité centrale de commande qui pilote l'usinage en faisant s'interposer ou non de façon sélective les cales entre chacun desdits poinçons et ledit moyen de presse grâce à des moyens de positionnement de cales, avant toute action dudit moyen de presse sur lesdits poinçons par l'intermédiaire des cales pour usiner le ruban, caractérisé en ce que :
- lesdits poinçons sont répartis en plusieurs ensembles d'outils élémentaires formant chacun une station de découpage,
- chaque poinçon est adapté à découper un rectangle d'usinage ayant la forme d'une barre mince,
- deux poinçons voisins d'une même station de découpage sont séparés par une distance supérieure à une distance prédéterminée,
- ledit moyen d'alimentation en ruban est adapté à faire avancer ledit ruban de la longueur d'une étiquette entre deux actionnements du moyen de presse, et
- les poinçons de chaque station de découpage sont disposés de façon à pouvoir découper dans une étiquette un rectangle d'usinage à une position sensiblement complémentaire des rectangles d'usinage pouvant être découpés dans ladite étiquette par les poinçons des autres stations de découpage lorsque ladite étiquette est usinée par lesdites autres stations de découpage, en recouvrant légèrement latéralement les emplacements adjacents où des rectangles d'usinage peuvent être découpés par des poinçons des autres stations de découpage afin de pouvoir obtenir des barres larges.

Avantageusement, lesdits moyens de positionnement de cales comprennent :

- des moyens de déplacement de cales agissant sur plusieurs cales à la fois par l'intermédiaire de moyens de compensation de course tels que des ressorts ;
- un moyen de blocage pour empêcher ou non une cale de se placer entre la presse et son poinçon sous l'action du moyen de déplacement de cales qui lui est associé.

Ainsi, les moyens de compensation de course garantissent que les moyens de déplacement de cales ne sont pas sollicités par des efforts trop importants lors du poinçonnement.

D'autres caractéristiques et avantages de la présente invention apparaîtront mieux à la lecture de la description suivante donnée à titre d'exemple non limitatif des formes possibles de réalisation de la présente invention, en regard des dessins ci-joints, et qui fera bien comprendre comment l'invention peut être réalisée.

Sur les dessins :
- la figure 1 représente un exemple d'étiquette ;
- les figures 2a à 2c illustrent la décomposition d'un code à barres ;
- la figure 3 est une représentation schématique d'une chaîne automatique de production d'étiquettes selon l'invention ;
- la figure 4 représente deux demi-vues en coupe schématiques, selon un plan vertical, d'une presse équipée selon l'invention, dans deux configurations ;
- la figure 5 est une vue en coupe partielle similaire à celles de la figure 4, mais à une plus grande échelle, illustrant le fonctionnement d'une presse semblable à celle de la figure 4 ;
- la figure 6 est une vue en plan schématique partielle montrant un jeu de cales d'une presse semblable à celle de la figure 4.

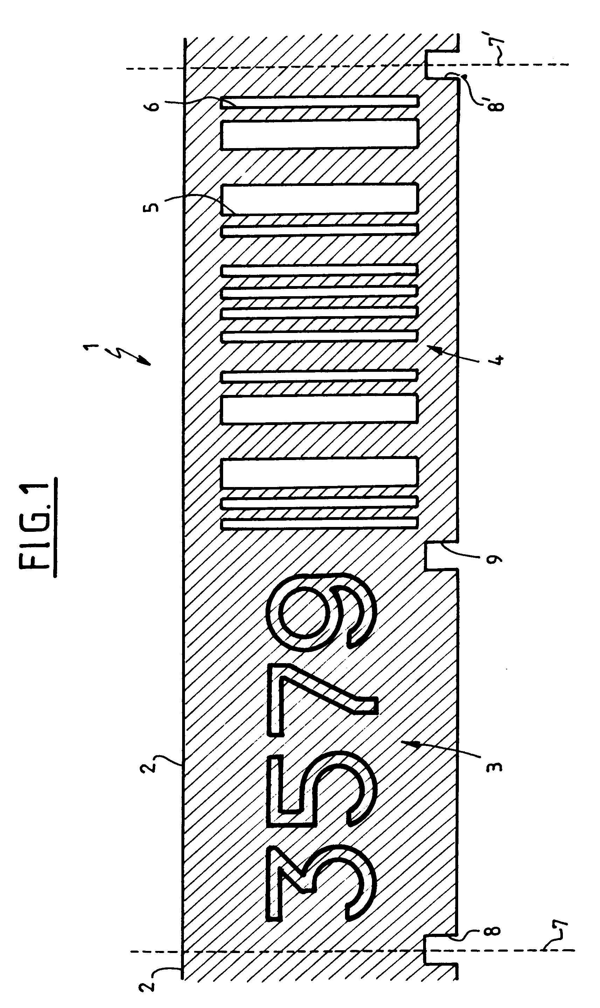

Sur la figure 1, on a représenté une étiquette 1, se présentant sous la forme d'un segment de ruban métallique 2 sur lequel figure deux expressions d'un même nombre : son expression alphanumérique 3 et son expression codée par barres 4. L'expression alphanumérique 1 est estampée, et apparaît, donc en relief ou en creux, alors que l'expression codée par barres 3 est découpée, les barres correspondant à des trous rectangulaires allongée larges 5 ou minces 6 pratiqués dans le ruban 1. Sur la figure, l'etiquette proprement dit est délimitée par les axes traversaux imaginaires 7 et 7′, passant respectivement par des encoches de délimitation 8 et 8′ pratiquées au bord du ruban pour le repérage des étiquettes lorsqu'elles ne sont pas encore séparées les unes des autres.

Une encoche centrale 9 similaire aux encoches de délimitation 8 et 8′ apparaît sur certaines étiquettes, par exemple celles présentant un défaut, pour les différencier des autres.

L'étiquette est donc métallique, est découpée dans du feuillard de faible épaisseur, par exemple de 0,1 à 0,2 mm, et comporte deux nombres identiques écrits dans deux codes différents :

- un code à barre découpe lu par des équipements spéciaux
- des chiffres emboutis lus par les opérateurs sur chaînes.

Les nombres peuvent être remplacés par des mots alphanumériques.

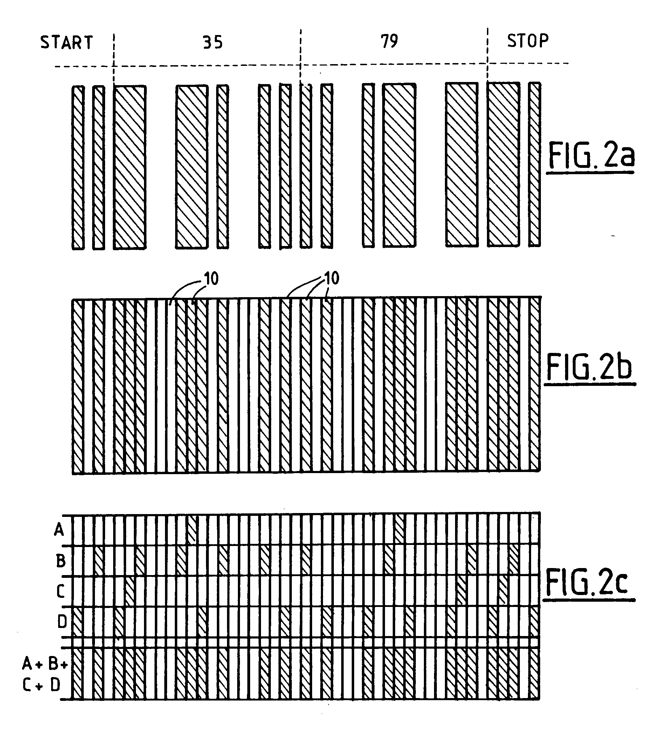

Pour produire en série des étiquettes telles qu l'étiquette 1 décrite ci-dessus, il a paru intérerssant de les réaliser au moyen d'une presse mécanique équipée de poinçons de découpage et d'outils d'estampage. Dans le but de simplifier l'outillage nécessaire au découpage du nombre codé par barres, on procède, comme suit. Les figures 2a à 2c illustrent le traitement préalable du nombre 3579 codé par barres. Nous sommes dans le cas du code à barres dit "2 parmi 5 entrelacés", composé de barres larges (BL), de barres minces (BM) d'espaces larges (EL) et d'espaces minces (EM). Comme cela apparaît sur la figure 2a, la succession de barres et d'espaces contient toujours l'information START (BM-EM-BM-EM) en début de code et l'information STOP (BL-EM-BM) en fin de code. Une barre large (BL) ou un espace large (EL) ont des largeurs identiques et égales à la largeur de trois barres minces (BM) ou de trois espaces minces (EM), soit en ce qui concerne leurs largeurs respectives : $(BL) = (EL) = 3(BM) = 3(EM)$. Il est donc possible de diviser la suite de barres et d'espaces parallèles composant l'information codée en une suite de rectangles, dits de calcul, égaux et parallèles 10, sensiblement de même longueur que lesdites barres, de façon que, après marquage surfacique de certains des rectangles de calcul 10, ladite suite de rectangles reconstitue ladite suite de barres et d'espaces, comme illustré sur la figure 2b. Chaque rectangle a la largeur d'une barre ou d'un espace minces. Les rectangles marqués ont été représentés en grisé par points sur la figure.

Ensuite, le procédé prévoit de décomposer ladite suite de rectangles de calcul 10 marqués ou non en plusieurs suites A, B, C et D complémentaires entre elles par superposition, c'est-à-dire telles que leur superposition permette de reconstituer ladite suite de barres et d'espaces de ladite information codée, et telles qu'aucune desdites suites complémentaires ne comporte des rectangles de calcul qui soient espacées d'une distance inférieure à une distance prédéterminée. Dans le cas de cet exemple, cette distance prédéterminée, qui dépend entre autres facteurs des encombrements des poinçons, est comprise entre deux fois et trois fois la largeur d'un rectangle, c'est pourquoi on a choise de décomposer la suite de rectangles marqués ou non en quatre suites A, B, C et D, comme illustré par la figure 2c, de façon à ce que les rectangles d'une suite soient espacés au minimum de trois fois la largeur d'un rectangle. Une fois cette décomposition effectuée, on peut découper le ruban de matériau en plusieurs passes successives, correspondant chacune à une suite complémentaire A, B, C ou D, selon des rectangles dits d'usinage correspondant sensiblement aux rectangles 10 marqués de ladite suite complémentaire A, B, C ou D, de façon à faire apparaître par découpage sur le ruban les barres de ladite information codée au fur et à mesure desdites passes.

Afin d'éviter le risque qu'il ne reste de la matière entre deux découpages par poinçonnement d'une même barre large, les rectangles d'usinage sont plus larges que les rectangles de calcul tout en restant centrés sur les rectangles de calcul, de façon à se recouvrir très légèrement dans une même barre large d'une passe à l'autre, sur une largeur dite de recouvrement.

Dans un exemple d'application de ce procédé, les rectangles de calcul marqués ou non ont une largeur de 0,42 mm correspondant au pas de la division du code à barres, et les rectangles d'usinage on une largeur de 0,44 mm pour 8 mm de longueur, correspondant à la largeur d'un poinçon de découpe, soit 0,02 mm de largeur de recouvrement pour les barres larges. Les poinçons de 0,44 mm découpent le ruban suivant le pas de la division soit 0,42 mm, et sont centrés sur les rectangles de calcul marqués, soit un débordement de 0,01 mm de part et d'autre du rectangle marqué. Donc, une fois le ruban découpe les largeurs suivantes sont obtenues :

- barres minces (BM) : 0,44 mm,
- barres larges (BL) : $(0,44 \times 3) - (2 \times 0,02) = 1,28$ mm,
- espaces minces (BM) : $0,42 - (2 \times 00,1) = 0,40$ mm,
- espaces larges (EL) : $(0,42 \times 3) - 2 \times 0,01 = 1,24$ mm.

Bien entendu, ces dimensions sont conformes aux tolérances de lecture et de lisibilité du code à barres.

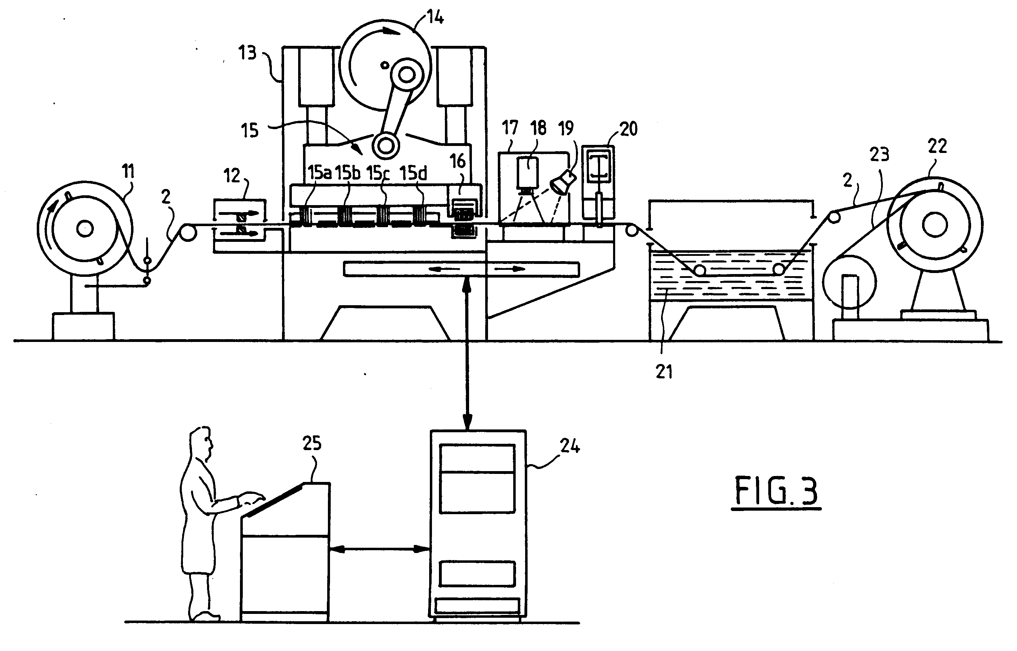

Sur la figure 3, une installation pour produire des étiquettes comprend :

- un moyen d'alimentation en ruban métallique ou feuillard support 2, comprenant essentiellement un dévidoir 11 et un dispositif d'avance au pas à pas 12 du ruban métallique 2;
- une presse mécanique 13 à excentrique 14 sur la quelle sont montés successivement, sur le trajet et dans le sens de déplacement du ruban 2 :
  - ledit dispositif d'avance au pas à pas 12 ;
  - un outillage de découpe pour le code à barres 15 comprenant 4 stations de découpage 15a, 15b, 15c et 15d munies chacune d'un ensemble de poinçons de découpe activables indépendamment les uns des autres selon les besoins de la découpe à effectuer sur le ruban, grâce à des cales ou tirettes de clavetage, non représentées sur cette figure, déplaçables, interposées ou non entre les poinçons et la presse ;

. une unité d'estampage à molette pour les chiffres arabes ;

- une poste de contrôle vision 17 par une caméra 18 sous un éclairage 19 ;
- une unité d'encochage 20 des étiquettes présentant un défaut ;
- un bain de dégraissage 21 du ruban ;
- un enrouleur 22 du ruban 2 découpé, estampe, encoché et dégraissé, celui-ci étant avantageusement enroulé avec un intercalaire papier 23 ;
- une unité centrale de commande 24 reliée à la presse et pilotant l'ensemble des opérations, telles que le découpage en activant ou non chacun des différents poinçons de chaque station de découpage 15a, 15b, 15c et 15d par l'intermédiaire desdites cales ou tirettes, ainsi que, notamment, l'estampage et l'encochage, à partir d'un programme de découpage défini au préalable et rentré dans une mémoire reliée à l'unité centrale 24 ;
- une console de dialogue homme-machine 25 reliée à l'unité centrale 24 permettant de rentrer en mémoire les informations correspondant à un programme de découpage et permettant de contrôler le déroulement des opérations. Une imprimate peut être reliée à la console de dialogue 25 et éditer des messages de fonctionnement.

Dans ce mode de réalisation de l'invention, les différentes étapes du procédé sont les suivantes, par cycle de fabrication :

- avance d'un pas de métal correspondant à une longueur d'étiquette, à l'aide du dispositif d'avance au pas à pas 12;
  - activations ou non de façon indépendante des poinçons de découpe des codes à barres sur chacune des stations de travail 15a, 15b, 15c et 15d, pilotées par l'unité centrale 24 ;
  - incrémentation des molettes d'estampage de l'unité d'estampage 16 ;
  - vérification de tous les états de position pour autorisation du cycle de presse ;
  - découpe et formage suivant ces positions ;
  - contrôle par vision de la correspondance des deux expressions, codée par barres et alphanumérique, du nombre de la dernière étiquette découpée et estampée, par l'unité centrale 24 en fonction des signaux que lui envoie la caméra 20 ;

  - encochage éventuel de l'étiquette précécente par l'unité d'encochage 20, si celle-ci est défectueuse ;
  - calcul de l'étiquette suivante à générer par l'unité centrale 24 ;
  - enroulement en continu, sans tension, des étiquettes déjà formées, par l'enrouler 22.

Le contrôle de la dernière étiquette et son estampage en cas de défaut, ainsi que le calcul de l'étiquette suivante peuvent être effectués pendant l'étape de découpe et d'estampage.

Faisons un parallèle entre la figure 2 et la figure 3. On a vu que les différentes suites complémentaires A, B, C et D de rectangles correspondaient à des passes différentes et complémentaires d'usinage d'une même étiquette. Lorsque le dispositif de la figure 3 produit des étiquettes en continu en usinant un ruban de matériau, le programme s'exécute comme suit, suivant les cycles de presse successifs :

- 1er cycle : la première étiquette est découpée selon sa suite complémentaire A à la station 15a;
- 2ème cycle : la première étiquette est découpée selon sa suite B à la station 15b, et la deuxième selon sa suite A à la station 15a ;
- 3ème cycle : la première étiquette est découpée selon sa suite C à la station 15c, la deuxième selon sa suite B à la station 15b, et la troisième selon sa suite A à la station 15a ;
- 4ème cycle : la première étiquette est découpée selon sa suite D à la station 15d, la deuxième selon sa suite C à la station 15c, la troisième selon sa suite B à la station 15b, et la quatrième selon sa suite A à la station 15a, et ainsi de suite.

Au cours du quatrième cycle de la presse, les premières, deuxièmes, troisièmes et quatrième étiquettes sont découpées respectivement à 100%, 75%, 50% et 25%.

L'initialisation du sytème s'effectue à l'arrêt au point mort haut sans protocole particulier, l'état initial est quelconque suivant le besoin de l'utilisateur, il est transmis par la console sous la forme du premier nombre ou mot à générer.

Le contrôle de l'étiquette, en continu, peut être effectué par une ou plusieurs caméras linéaires 18. L'unité centrale 24 lui envoie le nombre à reconnaître, elle le compare aux deux codages de l'étiquette et renvoie à L'unité centrale sa lecture et un message avec le code d'erreur éventuel. La lecture se fait sur poste éclairé immédiatement apès la presse. La vision est doublée (éventuellement deux caméras) pour éviter les erreurs sur la reconnaissance des chiffres et détecter les casses de poinçons là où elles sont le plus probables, notamment dans les extrémités. La reconnaissance des chiffres n'est généralement pas possible de façon directe avec des caméras linéaires. Le pixel (plus petit élément d'image pouvant être analysé) représentera de 0,1 à 0,2 mm. En conséquence, pour chaque chiffre, il suffira de scruter avec précision une zone significative qui permettra de reconnaître le chiffre estampé. Pour garantir la lecture, le chiffre est lu côté creux pour avoir une ombre parfaite sous lumière rasante.

Pour éviter une codification supplémentaire, les chiffres sont définis dans une matrice rectangulaire où l'on définit une ou plusieurs lignes de lecture. Chaque chiffre coupera cette ligne en un point différent des autres. Chaque chiffre sera ainsi reconnaissable avec une seule zone significative de quelques dixièmes de millimètres, la fiabilité de ce procédé résidant dans la précision de positionnement du chiffre à reconnaître. Dans le cas où la matrice de définition des chiffres doit être réduite pour des raisons d'encombrement, la reconnaissance sur deux lignes permettra de disposer de quatre points significatifs de reconnaissance au lieu de deux. Ce procédé peut être appliqué à des signes plus complexes que les chiffres (par exemple : alphabets), sans aucune autre préparation particulière qu'une légère déformation de ces signes.

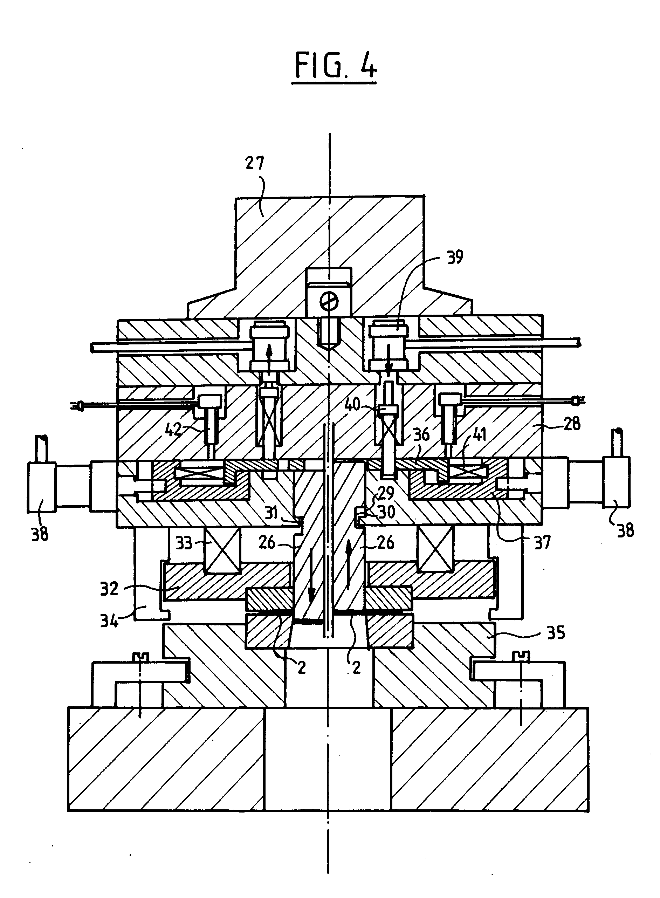

On comprendra mieux le processus d'activation des poinçons de découpe en référence à la figure 4, qui est une coupe transversale schématique de la presse autour des poinçons lorsque la presse est au point mort bas. La figure 4 est divisée en deux parties, une partie gauche et une partie droite, qui correspondent respectivement à une configuration dans laquelle le poinçon 26 représenté est activé, et une autre où il ne l'est pas.

On reconnaît sur cette figure les différents éléments constitutifs d'une presse, tel que le coulisseau de presse 27 rendu solidaire d'un bloc porte-poinçons 28 afin de pouvoir lui imprimer des déplacements suivant un axe vertical. On reconnaît également sur la figure 4 le bloc presse-flan 32, le ressort de presse-flan 33 et de dispositif de retenue du presse-flan 34, ainsi que le bloc matrice 35.

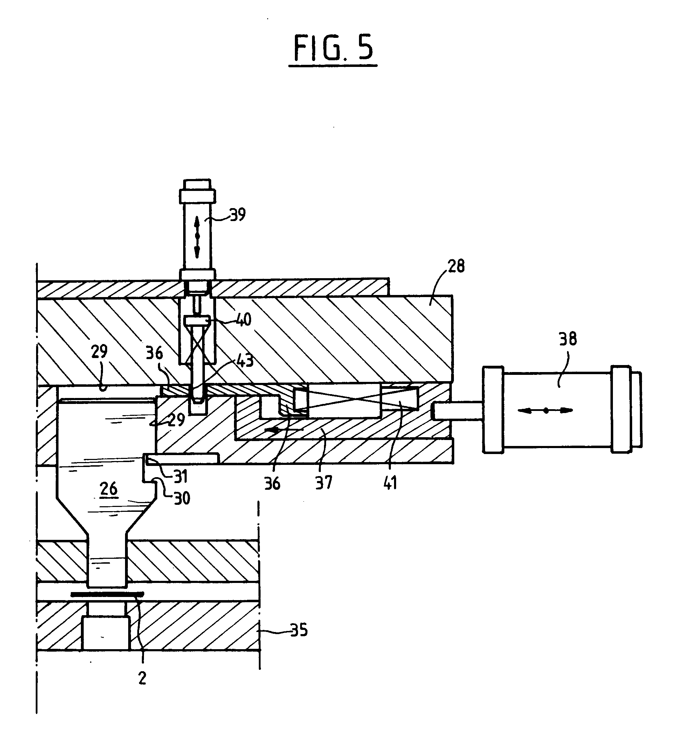

Ce qui suit peut également être lu en référence à la figure 5, qui est une vue rapprochée similaire à celles de la figure 4, la presse étant cette fois au point mort haut.

Le poinçon 26 est placé dans un logement 29 qui ne lui autorise qu'un seul de degré de liberté en translation verticale sur une certaine hauteur, définie par un décrochement 30 dans le poinçon qui peut jouer verticalement autour d'un erogt 31 dudit logement.

Une cale ou tirette 36 est prévue à l'intérieur du bloc porte-poinçons 28 de façon à pouvoir se déplacer en translation suivant un axe horizontal entre une position arrière (extérieure) et une position avant (intérieure). En position avant, l'extrémité avant de la cale 36 bloque le poinçon 26 en position basse dans son logement 29 en se plaçant entre sa tête et la partie supérieure de son logement 29, comme représenté sur la partie gauche de la figure 4, c'est-à-dire dans la confirmation où le poinçon est activé. Sur cette partie de la figure 4, le ruban métallique 2 vient d'être découpé par le poinçon 26. En position arrière, la cale 26 n'empêche pas le poinçon de se déplacer dans son logement 29, et lorsque le coulisseau de presse tombe (point mort bas), le poinçon repose sur le ruban métallique 2 par son propre poids et le ruban n'est pas découpé, comme illustré sur la partie droite de la figure 4, c'est-à-dire dans la configuration où le poinçon 26 n'est pas activé.

L'activation de chaque poinçon est donc faite en deux temps pour gagner en fiabilité et en précision (ensemble micromécanique). Le principe peut se définir ainsi : comme on l'a vu, chaque poinçon 26 a dans son logement 29 un degré de liberté en translation, et il est activé quand cette liberté est bloquée par une cale ou tirette 36 ; quand il n'est pas activé, le poinçon 26 vient juste reposer par sa propre masse (quelques grammes) sur le feuillard au point mort bas de la presse ; les cales sont positionnées par rapport au poinçon par un tiroir d'activation 37 commun à plusieurs tirettes 36. Ledit tiroir est commandé par un vérin 38 de puissance moyenne.

Sur ce tiroir d'activation 37, sont accrochées les tirettes 36 qui bloquent la tête des poinçons 26 sélectionnés. Le mode de sélection est effectué pour chaque tirette par de petits vérins -ou électro-aimants-d'indexage 39 déplaçant des pions ou tiges d'indexage 40, qui libèrent ou non lesdites tirettes 36, en les empêchant ou non de se déplacer par rapport au block porte-poinçons 28. Lesdites tirettes 36 étant liées au tiroir 37 par un ressort de compression 41 quand ce dernier passe en position avant, seules les tirettes qui ne sont pas stoppées par leurs pions d'indexage respectifs 40 viennent se glisser au-dessus des poinçons 26. Dans cet exemple, chaque pion d'indexage 40 est une tige coulissant dans le bloc porte-poinçons qui bloque la tirette qui lui est associée en venant se loger dans un trou 43 pratiqué dans cette tirette, l'axe longitudinal de ladite tige étant de préférence perpendiculaire à l'axe de translation de ladite tirette. Suivant le cycle de la presse : au point mort haut le tiroir 37 est avancé, et les pions donc les tirettes et par conséquent les poinçons sont sélectionnés. Dès le point mort bas, le tiroir d'activation 37 revient en position arrière en rappelant toutes les tirettes grâce audit accrochage. Les pions d'indexage 40 sont également rappelés et instantanément resélectionnés pour le nombre suivant. Le vérin d'activation 38 reprend sa position avant, en poussant toutes les tirettes qui ne rencontrent pas d'obstacle occasionné par les pions d'indexage. Dans le cas inverse, le ressort de compensation de course 41 interposé en compression entre la tirette 36 et le tiroir 37 est comprimé. La position de chaque tirette 36 est vérifiée au moyen d'une sonde à fibres optiques 42 reliée à l'unité centrale 24.

Pour reprendre la terminologie générale utilisée ici avant la description de cet exemple de réalisation de l'invention, le moyen de déplacement de cales comprend des vérins d'activation 38, commandés par l'unité centrale 24, actionnant des tiroirs d'activation 37 reliés à plusieurs cales 36 d'une part en traction par accrochage et d'autre part en compression par les ressorts de compensation de course 41. De même, le moyen de blocage de cales comprend les vérins d'indexage 39 et les tiges d'indexage 40, commandés par l'unité centrale 24.

Le dispositif de l'invention est fiable, car :
- les courses des éléments en mouvement 26, 36, 37, 40, ... sont très faibles;
- les mouvements des pièces sont en translation, sans risque de coincement;
- les positions des tirettes 36 sont contrôlées;
- les efforts de découpe sont supportés par des éléments travaillant en cisaillement;
- les vérins actioneurs 38, 39 ne supportent aucun autre effort que ceux nécessaires aux mouvements des pièces et aux réactions des ressorts.

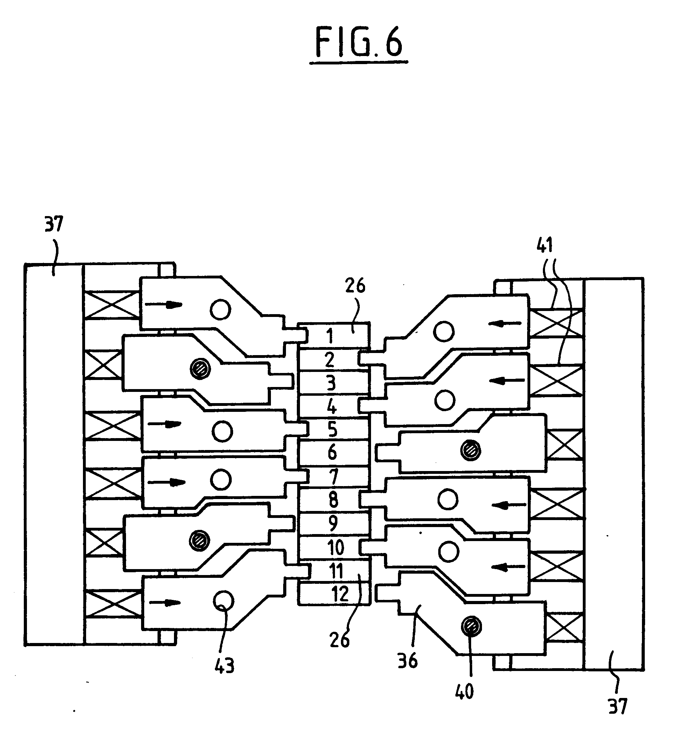

La figure 6 montre un jeu de tirettes 36 et de poinçons de découpe 26 vus de dessus, avec deux tiroirs d'activation 37 situés l'un en face de l'autre, un de chaque côté du jeu de poinçons 26. Les tiroirs sont en position avant, et one déplacé les tirettes libres par l'intermédiaire des ressorts de compensation de course 41. Les tirettes libres sont celles qui ne sont pas bloquées par des tiges d'indexage 40 passant par leurs trous 43 ; elles ont leur extrémité avant au-dessus de la tête du poinçon 26 associé. Par contre, les tirettes bloquées par les tiges d'indexages 40 provoquent la compression de leurs ressorts de compensation de course respectifs 41 et laissent libre les têtes des poinçons qui leur sont associés. Lorsque le coulisseau de presse s'abaissera, seuls les poinçons coiffés par une extrémité de tirette ou cale 36 découperont le ruban métallique.

On voit qu'il est ainsi possible de mettre en oeuvre le procédé de l'invention grace au dispositif décrit en références aux dessins, pour produire des étiquettes. En effet, la division et la décomposition du code à barre en rectangles marqués ou non sont bien adaptées à l'utilisation de poinçons identiques de forme rectangulaire et activables de façon indépendante sous une même presse.

La presse peut être considérée comme un périphérique d'ordinateur au même titre qu'une imprimante. En effet, son architecture et son principe de fonctionnement permettent d'activer les poinçons de manière complèment aléatoire. Le nombre de combinaisons possibles est fonction du nombre de poinçons utiles (si n est le nombre de poinçons, le nombre de combinaisons est de $2^n-1$).

Ces poinçons ne sont pas nécessairement de découpe. Ils peuvent être d'emboutissage de cambrage ou de matriçage et d'une façon générale relever de toute technique applicable au travail des métaux en feuille sur presse mécanique. Leur mode de commande permet de moduler le réglage des formes à la demande (profondeur d'emboutissage, épaisseur de matriçage, surface de découpe, angle ou rayon de cambrage, etc.). Il permet donc un réglage selon deux dimensions entre chaque coup de presse sans intervention manuelle.

La rapidité est obtenue par des courses des vérins très courtes et des inerties très faibles. A titre d'exemple, les vérins de sélection peuvent atteindre 500 à 600 battements par minute, dans les conditions précédemment décrites.

La précision et la rigueur des procédés employés, une fois définis, rendent simple leur mise en place et leur multiplication. Pour ce qui est du code à barre découpé dans un bandeau métallique, il apparaît comme une besoin important pour les secteurs industriels tels que l'automobile, l'électromécanique, la radio-télévision, le matériel électrique où les cycles de fabrication et de montage sont particulièrement automatisés.

## Revendications

1. Procédé d'usinage d'un ruban (2), notamment métallique, en vue d'obtenir des étiquettes (1) portant une information codée par barres (4) comportant au moins des barres minces (BM) et des barres larges (BL) découpées par un seul type de poinçon dans lesdites étiquettes, caractérisé en ce que le procédé comporte les étapes suivantes, répétées cycliquement :
   - usiner simultanément plusieurs étiquettes (1) au moyen de poinçons (26) indépendants actionnables séléctivement et adaptés à découper chacun un rectangle d'usinage ayant la forme d'une barre mince (BM), lesdits poinçons (26) étant répartis en plusieurs stations de découpage (15a, 15b, 15c, 15d) permettant chacune l'usinage partiel d'une desdites plusieurs étiquettes (1) usinées simultanément, les rectangles d'usinage pouvant être découpés par deux poinçons (26) voisins d'une même station de découpage (15a, 15b, 15c, 15d) étant séparés par une distance supérieure à une distance prédéterminée,

- faire avancer le ruban (2) de la longueur d'une étiquette (1), de sorte qu'une même étiquette (1) est successivement usinée par toutes les stations de découpage (15a, 15b, 15c, 15d), les poinçons (26) de chaque station de découpage (15a, 15b, 15c, 15d) étant disposés chacun de façon à pouvoir découper un rectangle d'usinage à une position sensiblement complémentaire des rectangles d'usinage pouvant être découpés par les poinçons (26) des autres stations de découpage (15a, 15b, 15c, 15d), en recouvrant légèrement latéralement les emplacements adjacents où des rectangles d'usinage peuvent être découpés par des poinçons (26) des autres stations de découpage (15a, 15b, 15c, 15d) afin de pouvoir obtenir des barres larges.

2. Procédé selon la revendication 1, caractérisé en ce qu'il comprend en outre l'étape d'estamper sous sa forme alphanumérique (3) l'information codée par barres (4) sur le ruban (2).

3. Procédé selon la revendication 2, caractérisé en ce qu'il comporte en outre l'étape de contrôler la concordance entre l'expression codée par barre et l'expression alphanumérique de ladite information.

4. Procédé selon la revendication 3, caractérisé en ce que les chiffres du code alphanumérique sont reconnaissables par leur intersection avec au moins un axe longitudinal parallèle au sens de leur lecture et en ce que l'étape de contrôle est assurée à l'aide d'au moins une caméra linéaire (18) qui explore le ruban selon le(s)dit(s) axe(s).

5. Dispositif d'usinage d'un ruban (2), notamment métallique, en vue d'obtenir des étiquettes (1) portant une information codée par barres (4) comportant au moins des barres minces (BM) et des barres larges (BL) découpées, ledit dispositif comprenant :
   - un moyen d'alimentation (11, 12) en ruban (2) ;
   - un moyen de presse (27, 28) ;
   - des poinçons (26) identiques actionnables par l'intermédiaire de cales (36) par ledit moyen de presse pour usiner le ruban (2) ;
   - une unité centrale de commande (24) qui pilote l'usinage en faisant s'interposer ou non de façon sélective les cales (36) entre chacun desdits poinçons (26) et ledit moyen de presse (27, 28) grâce à des moyens de positionnement de cales (38, 41, 37, 39, 40), avant toute action dudit moyen de presse sur lesdits poinçons par l'intermédiaire des cales pour usiner le ruban (2),
caractérisé en ce que :
   - lesdits poinçons (26) sont répartis en plusieurs ensembles d'outils élémentaires (15a, 15b, 15c, 15d) formant chacun une station de découpage,
   - chaque poinçon (26) est adapté à découper un rectangle d'usinage ayant la forme d'une barre mince (BM),
   - deux poinçons (26) voisins d'une même station de découpage (15a, 15b, 15c, 15d) sont séparés par une distance supérieure à une distance prédéterminée,
   - ledit moyen d'alimentation (11, 12) en ruban (2) est adapté à faire avancer ledit ruban (2) de la longueur d'une étiquette (1) entre deux actionnements du moyen de presse (27, 28), et
   - les poinçons (26) de chaque station de découpage (15a, 15b, 15c, 15d) sont disposés de façon à pouvoir découper dans une étiquette (1) un rectangle d'usinage à une position sensiblement complémentaire des rectangles d'usinage pouvant être découpés dans ladite étiquette (1) par les poinçons (26) des autres stations de découpage (15a, 15b, 15c, 15d) lorsque ladite étiquette (1) est usinée par lesdites autres stations de découpage, en recouvrant légèrement latéralement les emplacements adjacents où des rectangles d'usinage peuvent être découpés par des poinçons (26) des autres stations de découpage (15a, 15b, 15c, 15d) afin de pouvoir obtenir des barres larges.

6. Dispositif selon la revendication 5, caractérisé en ce que lesdits moyens de positionnement de cales comprennent :
   - des moyens de déplacement de cales (38, 37) agissant sur plusieurs cales (36) à la fois par l'intermédiaire de moyens de compensation de course tels que des ressorts (41) ;
   - un moyen de blocage (39, 40, 43) pour empêcher ou non une cale (36) de se placer entre la presse et son poinçon (26) sous l'action du moyen de déplacement de cales (37, 38) qui lui est associé.

7. Dispositif selon la revendication 6, caractérisé en ce que lesdits moyens de déplacement comprennent des vérins à fluide et/ou des relais électromécaniques.

**8.** Dispositif selon l'une quelconque des revendications 5 à 7, caractérisé en ce qu'il comporte en outre une unité d'estampage (16) de chiffres alphanumériques.

**9.** Dispositif selon l'une quelconque des revendications 5 à 8, caractérisé en ce qu'il comprend également un poste de contrôle (17) de l'usinage dudit ruban de matériau et un poste de marquage (20) des segments dudit ruban jugés défectueux après contrôle, le poste de contrôle comprenant une caméra (18), reliée à l'unité centrale de commande (24), et chargée d'explorer le ruban de matériau (2) après usinage.

**10.** Dispositif selon la revendication 6, caractérisé en ce que le moyen de déplacement de cales comprend des vérins d'activation (38) commandés par l'unité centrale (24) actionnant des tiroirs d'activation (37) reliés à plusieurs cales en traction par accrochage et en compression par les moyens ou ressorts de compensation de course (41) individuels, et en ce que le moyen de blocage de cales comprend des vérins d'indexage (39) commandés par l'unité centrale (24) pour actionner des tiges d'indexage (40) empêchant le déplacement de certaines cales pour aller s'interposer entre la presse et les poinçons correspondants, le déplacement du tiroir vers ces cales étant alors encaissé par lesdits ressorts.

**Claims**

**1.** Method for machining a strip (2), in particular a metal strip, with a view to obtaining labels carrying information coded by bars (4) and comprising at least thin bars (TB) and large bars (WB) cut by a single type of punches in said labels, the method comprising the periodically repeated following stages :
- simultaneous machining of several labels (1) by means of independent punches (26) able to be activated selectively and each adapted to cut a machining rectangle having the shape of a thin bar (BM), said punches (26) being distributed in several cutting stations (15a,15b, 15c, 15d) each allowing for the partial machining of one of said several labels machined simultaneously, the machining rectangles able to be cut by two punches (26) next to a given cutting station (15A, 15b, 15c, 15d) separated by a distance greater than a predetermined distance.
- moving the strip (2) by the length of one label so that a given label (1) is successively machined by all the cutting stations (15a, 15b, 15c, 15d), the punches (26) of each cutting station (15a, 15b, 15c, 15d) being each disposed so as to be able to cut a machining rectangle at a position roughly complementary to the machining rectangles able to be cut by the punches (26) of the the other cutting stations (15a, 15b, 15c, 15d), by overlapping slightly and laterally the adjacent locations where machining rectangles may be cut by the punches (26) of the other machining stations (15a, 15b, 15c, 15d) so as to obtain wide bars.

**2.** Method according to claim 1, wherein it further comprises a stage to stamp in an alphanumerical form (3) the information coded by bars (4) on the strip (2).

**3.** Method according to claim 2, wherein it comprises in addition a stage to control concordance between the bar-coded expression and the alphanumerical expression of said information.

**4.** Method according to claim 3, wherein the figures of the alphanumerical code are identifiable via their intersection with at least one longitudinal axis parallel to the direction of their reading and wherein the controlling stage is ensured with the aid of at least one linear camera (18) which scans the strip according to said axis(es).

**5.** Device for machining a strip (2), in particular a metallic strip, with a view to obtaining labels (1) carrying bar-coded information (4) and comprising at least cut thin bars (TB) and large bars (WB), said device comprising :
- a device (11, 12) for feeding the strip (2) ;
- a pressing device (27, 28) ;
- identical punches able to be activated by means of shims (36) by said pressing device so as to machine the strip (2) ;
- a control central processing unit (24) which controls the machining operation by possibly selectively inserting the shims (36) between said punches (26) and said pressing device (27, 28) with the aid of means for positioning the shims (38, 41, 37, 39, 40) prior to any action of said pressing device is activated on said punches by means of shims to machine the strip (2).

wherein :
- said punches (26) are distributed in several sets of elementary tools (15a, 15b, 15c, 15d) each forming a cutting station,
- each punch (26) is adapted so as to cut a machining rectangle shaped like a thin bar (TB),
- two punches (26) next to a given cutting station 15a, 15b, 15c, 15d) are separated by a distance greater than a predetermined distance,
- said means (11, 12) for feeding the strip (2) are adapted to move said strip (2) from the length of one label (1) between two activations of the pressing means (27, 28), and
- said punches (26) of each cutting station (15a, 15b, 15c, 15d) are disposed so as to be able to cut in one label (1) a machining rectangle at a position roughly complementary to the machining rectangles able to be cut in said label (1) by punches (15a, 15b, 15c, 15d) when said label (1) is machined by said other cutting stations, by overlapping slightly and laterally the adjacent locations where the machining rectangles may be cut by the punches (26) of the other machining stations (15a, 15b, 15c, 15d) so as to be able to obtain large bars.

6. Device according to claim 5, wherein said means for positioning the shims comprise :
- means for moving the shims (38, 37) acting on several shims (36) with the aid of travel compensation means, such as springs (41) ;
- a blocking device (39, 40, 43) to possibly stop a shim (36) from being placed between the press and its punch (2) under the action of the shim displacement device (37, 38) associated with it.

7. Device according to claim 6, wherein said displacement means comprise fluid jacks and/or electromechanical relays.

8. Device according to any one of claims 5 to 7, wherein it further comprises a unit (16) for stamping alphanumerical figures.

9. Device according to any one of claims 5 to 8, wherein it comprises also a control station (17) for machining said material strip and a station (20) for marking the segments of said ruban found defective following control, the control post comprising a camera (18) connected to the control central processing unit (24) and whose role is to scan the material strip (2) following machining.

10. Device according to claim 6, characterized in that the means for displacing the shims comprise activation jacks (38) controlled by the central processing unit (24) activating the activation slide valves (37) connected to several shims in traction by hooking and in compression by the individual means or travel compensation springs (41), and wherein the means for blocking the shims comprise indexing jacks (39) controlled by the central processing unit (24) to activate the indexing rods (40) stopping the displacement of certain shims so as to be inserted between the press and the corresponding punches, displacement of the slide valve towards the shims being boxed in by said springs.

**Patentansprüche**

1. Verfahren zur Bearbeitung eines insbesondere metallischen Streifens (2) zur Herstellung von Etiketten (1) mit codierten Informationen in Form von Balken (4), die mindestens aus schmalen Balken (SB) und breiten Balken (BB) bestehen, welche mit ein und demselben Typ Stanzstempel aus den besagten Etiketten ausgestanzt werden, wobei das Verfahren folgende sich sch wiederholende Schritte beinhaltet:
- gleichzeitiges Bearbeiten mehrerer Etikette (1) durch voneinander unabhängige Stempel (26), die selektiv aktiviert werden können und von denen jeder ein Rechteck ausstanzen kann, das die Form eines schmalen Balkens (SB) hat, wobei diese Stempel (26) auf mehrere Stanzstationen (15a, 15b, 15c, 15d) aufgeteilt sind, von denen jede eine gleichzeitige und teilweise Bearbeitung eines der Etiketten (1) bewirkt, und wobei zwei benachbarte Stempel (26) auf ein und derselben Stanzstation (15a, 15b, 15c, 15d) sich in einem Abstand voneinander befinden, der über einem vorgegebenen Abstand liegt,
- Weiterbefördern des Streifens (2) um jeweils die Länge eines Etiketts (1) sodaß ein und dasselbe Etikett (1) nacheinander von jeder der Stanzstationen (15a, 15b, 15c, 15d) bearbeitet wird, wobei jeder der Stempel einer Stanzstation (15a, 15b, 15c, 15d) so angeordnet ist, daß er ein Bearbeitungsrechteck ausstanzen kann, das weitgehend die Bearbeitungsrechtecke ergänzt, die von den anderen Stempeln (26) der übrigen Stanzstationen (15a, 15b, 15c, 15d) ausgestanzt werden können, wobei zur Herstellung breiter Balken ein leichtes seitliches Überlappen der Stanzungen an den Stellen erfolgt, an denen Bearbeitungsrechtecke von den Stempeln (26) der anderen Stanzstationen (15a, 15b, 15c, 15d) ausgestanzt werden können.

2. Verfahren nach Patentanspruch 1, dadurch gekennzeichnet, daß es zusätzlich einen Schritt zur Prägung von alphanumerischen Zeichen (3) beinhaltet, die durch die Balken (4) auf dem Streifen (2) codiert werden.

3. Verfahren nach Patentanspruch 2, dadurch gekennzeichnet, daß es zusätzlich einen Kontrollschritt zur Überprüfung auf Übereinstimmung zwischen der alphanumerischen Prägung und deren Balkencode beinhaltet.

4. Verfahren nach Patentanspruch 3, dadurch gekennzeichnet, daß die Zeichen des alphanumerischen Codes in deren Schnittpunkt mit mindestens einer in Ableserichtung verlaufenden Längsachse erkennbar sind und der Kontrollschritt mit mindestens einer linearen Kamera (18) erfolgt, die den Streifen auf der bzw. den o.a. Achsen abliest.

5. Vorrichtung zur Bearbeitung eines insbesondere metallischen Streifens (2) zur Herstellung von Etiketten (1) mit codierten Informationen in Form von Balken (4), die mindestens aus schmalen Balken (SB) und breiten Balken (BB) bestehen, mit
   - Mitteln (11, 12) zur Beschickung der Vorrichtung mit Streifen (2),
   - einer Presse (27, 28),
   - identischen Stempeln (26), die über Verriegelungen (36) durch die o.a. Presse zur Bearbeitung des Streifens (2) aktiviert werden können,
   - einer Zentraleinheit (24) zur Steuerung der Bearbeitung durch selektives Einschieben bzw. Herausziehen der Verriegelungen (36) zwischen jedem einzelnen der Stempel (26) und der Presse (27, 28) mit Hilfe von Mitteln (38, 41, 37, 39, 40) zum Positionieren der Stempelverriegelungen vor jedem Arbeitsspiel der Presse und somit Betätigung der Stempel über die Verriegelungen zur Bearbeitung des Streifens (2),
   dadurch gekennzeichnet, daß
   - die Stempel (26) auf mehrere Baugruppen mit Elementarwerkzeugen (15a, 15b, 15c, 15d) aufgeteilt sind, die jeweils eine Stanzstation bilden,
   - jeder Stempel (26) so ausgelegt ist, daß er ein Bearbeitungsrechteck in Form eines schmalen Balkens (SB) ausstanzen kann,
   - je zwei nebeneinander liegende Stempel (26) ein und derselben Station (15a, 15b, 15c, 15d) in einem Abstand voneinander liegen, der über einem vorgegebenen Abstand liegt,
   - die Mitteln (11, 12) zur Beschickung der Vorrichtung mit Streifen (2) so ausgelegt sind, daß sie ein Weiterrücken des Streifens (2) um die Länge eines Etiketts (1) zwischen zwei Arbeitsspielen der Presse (27, 28) bewirken und
   - jeder der Stempel einer Stanzstation (15a, 15b, 15c, 15d) so angeordnet ist, daß er ein Bearbeitungsrechteck ausstanzen kann, das weitgehend die Bearbeitungsrechtecke ergänzt, die von den anderen Stempeln (26) der übrigen Stanzstationen (15a, 15b, 15c, 15d) ausgestanzt werden können, wobei zur Herstellung breiter Balken ein leichtes seitliches Überlappen der Stanzungen an den Stellen erfolgt, an denen Bearbeitungsrechtecke von den Stempeln (26) der anderen Stanzstationen (15a, 15b, 15c, 15d) ausgestanzt werden können.

6. Vorrichtung nach Patentanspruch 5, dadurch gekennzeichnet, daß die Mittel zur Positionierung der Stempelverriegelungen
   - Mittel (38, 37) zur Verlagerung der Stempelverriegelungen besitzen, durch die mehrere Stempelverriegelungen (36) zugleich durch Wegausgleichsmittel wie z.B. Federn (41) verlagert werden,
   - eine Blockiervorrichtung (39, 40, 41) besitzen, durch die das Vorschieben einer Stempelverriegelung zwischen die Presse und den Kopf des Stempels (26) unter Betätigung der entsprechenden Mittel (37, 38) zur Verlagerung der Stempelverriegelungen ermöglicht bzw. verhindert wird.

7. Vorrichtung nach Patentanspruch 6, dadurch gekennzeichnet, daß die Mittel zur Verlagerung Druckzylinder und/oder elektromechanische Relais beinhalten.

8. Vorrichtung nach einem beliebigen der Patentansprüche 5 bis 7, dadurch gekennzeichnet, daß sie zusätzlich eine Vorrichtung zum Prägen alphanumerischer Zeichen (3) beinhaltet.

9. Vorrichtung nach einem beliebigen der Patentansprüche 5 bis 8, dadurch gekennzeichnet, daß sie zusätzlich eine Kontrollvorrichtung (17) zur Überprüfung der Bearbeitung des Metallstreifens sowie eine Markiervorrichtung (20) für Streifenabschnitte besitzt, die bei der Kontrolle als fehlerhaft erkannt wurden, wobei die Kontrollvorrichtung eine Kamera (18) beinhaltet, die an die Zentraleinheit (24) angeschlossen ist und die Aufgabe hat, den bearbeiteten Metallstreifen (2) abzulesen.

10. Vorrichtung nach Patentanspruch 6, dadurch gekennzeichnet, daß das Mittel zur Verlagerung der Stempelverriegelungen Druckzylinder (38) besitzt, die über die Zentraleinheit (24) gesteuert werden und Schieber (37) verlagern, die mit mehreren Stempelverriegelungen bei Zug durch Einhängen und bei Druck durch einzelne Druckfedern (41) verbunden sind, sowie dadurch, daß das Mittel zur Blockierung der Stempelverriegelungen ebenfalls von der Zentraleinheit (24) gesteuerte Verriegelungsantriebe (39) besitzt, durch die Verriegelungsstifte (40) betätigt werden, durch die die Verlagerung einzelner Stempelverriegelungen zwischen die Presse und den Kopf der entsprechenden Stempel verhindert wird, wobei durch die Verlagerung des Schiebers zu den Stempelverriegelungen die Druckfedern zusammengedrückt werden.

## FIG.1

EP 0 296 024 B1

FIG.2a

FIG.2b

FIG.2c

FIG.3

# FIG. 4

# FIG. 5

# FIG.6